Europäisches Patentamt

European Patent Office

Office européen des brevets

(19)

(11) Veröffentlichungsnummer: **0 224 095**
**B1**

(12) **EUROPÄISCHE PATENTSCHRIFT**

(45) Veröffentlichungstag der Patentschrift: 10.10.90

(21) Anmeldenummer: 86115462.3

(22) Anmeldetag: 05.11.86

(51) Int. Cl.⁵: **E 01 C 9/08,** E 01 C 5/20,
E 02 D 17/20

(54) Gitterplatte aus Kunststoff, insbesondere aus Recycling- Kunststoff.

(30) Priorität: 22.11.85 AT 3413/85

(43) Veröffentlichungstag der Anmeldung:
03.06.87 Patentblatt 87/23

(45) Bekanntmachung des Hinweises auf die
Patenterteilung:
10.10.90 Patentblatt 90/41

(84) Benannte Vertragsstaaten:
BE CH DE FR GB LI NL

(56) Entgegenhaltungen:
EP-A-0 117 707
DE-A-2 940 236
DE-A-3 327 867
DE-C- 804 960
US-A-3 836 075
US-A-4 226 064

(73) Patentinhaber: Dr. Spiess Kunststoff-Recycling
GmbH & Co.
D-6719 Kleinkarlbach (DE)

(72) Erfinder: Haberhauer, Karl
Beim Bergtor 4
D-6718 Grünstadt (DE)
Erfinder: Lieberenz, Alfred
In den Ziegelgärten 26
D-6700 Ludwigshafen (DE)
Erfinder: Feyerabend, Klaus-Dieter
Finkenweg 5
D-6149 Rimbach/Odenwald (DE)
Erfinder: Heitzmann, Bruno, Dr.
Salinenstrasse 95
D-6702 Bad Dürkheim (DE)
Erfinder: Schimmel, Harry
Schlachthofstrasse 12
D-6718 Grünstadt (DE)

Courier Press, Leamington Spa, England.

**Beschreibung**

Die Erfindung betrifft eine Gitterplatte nach dem Oberbegriff des Anspruchs 1.

Gitterplatten aus Kunstoff sind bereits mehrfach bekannte. Die Verbindung zur benachbarten, bereits verlegten Gitterplatte besthet z.B., wie bereits die DE—A—2940236 offenbart, aus einem bzw. mehreren Hakenelementen, die über zwei sich kreuzende Sietenwände hinausragen. Fangteile an den beiden anderen Seiten, welche Nasen aufweisen, dienen zur Verriegelung mit den Hakenelementen. Die bei der Verlegung entstehenden Fugen von einer zur benachbarten Platte werden anschließend durch Koppelelemente überbrückt bzw. ausgefüllt. Dies erfordert ein zusätzliches Bauelement und einen zusätzlichen Arbeitsgang. Für nichthartem Untergrund und hohe Belastung ist diese Platte nicht geeignet.

Durch die DE—C—804 960 sind kastenförmige Stäbe bekannt, die durch eine seitlich angeordnete Feder und Nut ineinanderschiebbar sind. Um diesen Zustand auch bei einer etwaigen Belastung zu gewährleisten, werden die Nutseiten mit dem Untergrund verstiftet.

Die US—A—3 836 075 zeigt eine Bodenbefestigungsplatte zum Befestigen von Garageneninfahrten etc. Abstehende Steckelemente können in entsprechende Ausnehmungen der Gegenseite eingesteckt werden. Diese Befestigungsplatte ist jedoch nur in Streifen verlegbar und ist bei einer flächenartigen Bodenbefestigung mit einem Nachbarstreifen nicht verriegelbar.

Die EP—A—0 117 707 offenbart eine Bodenbefestigungsplatte, die durch Verstöpselung aller vier Seiten mit den angrenzenden Platten verlegt werden kann.

Eine Verstöpselung erfordert beim Verlegen einen hohen Zeitaufwand. Außerdem müssen die Lochabstände in gewissen Toleranzen angebracht werden, um eine Verstöpselung zu ermöglichen.

Die DE—A—33 27 867 zeigt eine Befestigungsplatte mit nach allen vier Seiten überstehenden Zahnlappen, die mit der Plattenoberfläche in gleicher Höhe liegen und die in dazwischenliegenden Lücken eingreifen, die zur Oberfläche versenkt angeordnet sind, Diese Platten werden von oben auf die bereits verlegte Nachbarplatte aufgelegt. Eine Sicherung gegen Abhenden nach oben ist jedoch nicht vorgesehen.

Durch die US—A—4 226 064 ist eine weitere Platte bekannt, welche an zwei im rechten Winkel zueinanderstehende Seiten zur unterseite hinweisende Haken aufweist, die sich in eine bis zum Boden reichende Lücke, die an den beiden anderen Seiten vorgesehen ist, in eine benachbarte Platte einhaken. Weitere Fangelemente verhindern eine Entriegelung, wenn seitliche Kräfte auf den Bodenbelag einwirken. Eine Demontage eines solchen Bodenbelages ist nur schwer wieder durchführbar.

Aufgabe der Erfindung ist, eine Gitterplatte zu erstellen, die sich leicht verlegen läßt, wobei eine mit Gitterplatten befestigte Fläche durch erhebliche vertikale un horizontale Kräfte belastbar ist, indem sich diese beim Verlegungsvorgang mit den benachbarten Gitterplatten verriegelt und die bei Bedarf wieder einfach demontierbar ist, bei der es kein Zusetzen der Verriegelungsteile mit Untergrund auf lockerem Boden gibt und die durch besondere Formgestaltung einfach und billig in der Herstellung ist.

Diese Aufgabe wird durch den kennzeichnenden Teil des Anspruchs 1 gelöst.

Die Seitenwandung ist im Bereich der Wanddurchbrüche von der Gitterplattenoberseite ausgehend nach unten stufenförmig abgesetzt. Die Seitenwandung der Gitterplatte kann mindestens einen parallel zur Oberseite der Gitterplatte herausragenden Verbindungssteg aufweisen, dessen freies Ende hakenförmig abgewinkelt ist. Die Verbindungsstege sowie die Wanddurchbrüche bilden die Halbscharniere, in die sich die Gitterplatten gegenseitig verhaken und verriegeln. Diese Verriegelung der Halbscharniere läßt sich leicht und beliebig oft lösen bzw. ineinander verhaken. Bei der Montage sowie bei der Demontage müssen die Gitterplatten um einen bestimmten Winkel, etwa 30° bis 45° in eine Schräglage gebracht werden, erst dann rasten die Halbscharniere ein bzw. können gelöst werden. Die Wanddurchbrüche sind horizontal in der gegenüberligenden Seitenwand in gleicher Position wie die Verbindungsstege angeordnet und liegen in der zur Oberseite parallelen Stufenwand und dienen zur seitlichen Führung und Abstützung der Verbindungsstege.

In vorteilhafter Ausgestaltung der Erfindung können die Verbindungsstege in oder Länge bis zur hankenförmigen Abwinkelung so bemessen sein, daß den Gitterplatten eine Verschiebefreiheit von etwa 15 mm voneiander bzw. zueinander gegeben ist. Dadurch läßt sich das Schrumpfen und Verwerfen der Gitterplatten nach dem Entformen in Grenzen kompensieren. Es ist aber auch damit die Möglichkeit gegeben, die Gitterplatten in einem flachen Kreisbogen zu verlegen.

Schließlich kann die Gitterplatte in Form eines Quadrates konzipiert sein. Die quadratischen Gitterplatten werden als Anfangsstücke beim Verlegen in zueinander versetzter Form benötigt. Ebenso können damit auch schmale Bankette, wie z.B. Autobahnauffahrten u.a., befestigt werden.

Nach dem Verlegen können die Gitterplatten bei weichem Untergrund (Sand) eingerüttelt werden. Dabei füllen sich die Holräume an der Unterseite der Gitterplatte mit Erdreich.

Anhand eines in der Zeichnung dargestellten Ausführungsbeispieles, soll die Erfindung näher erläutert werden.

Es zeigen:

Fig. 1 einen Querschnitt der Gitterplatte gemäß der Erfindung,

Fig. 2 eine Teilansicht von oben,

Fig. 3 einen Teilquerschnitt durch zwei verriegelte Gitterplatten im auseinandergezogenen Zustand,

Fig. 4 einen Teilquerschnitt durch zwei verriegelte Gitterplatten im normalen Verlegungszustand und

Fig. 5 einen Querschnitt durch zwei Gitterplatten, der das Einstecken der Verbindungsstege in die Wanddurchbrüche einer bereits verlegten Gitterplatte demonstriert.

Wie aus den Fig. zu erkennen ist, weist die Oberseite 2 der Gitterplatte 1 eine rauhe rutschhemmende Oberfläche auf, die von Durchbrüchen 3 durchbrochen ist. Die Durchbrüche 3 erlauben einen Grasbewuchs einer mit Gitterplatten abgedeckten Bodenfläche 4. An der Unterseite 5 ist eine Verrippung 6 vorgeshen, die der Gitterplatte 1 die notwendige Stefigkeit gibt und zur besseren Verankerung im Boden dient. An einer Seitenwandung 7 sind Verbindungsstege 8 angeordnet, die an den freien Enden 9 hakenförmig in Richtung zur Oberseite 2 abgewinkelt sind. Um eine Materialanhäufung in diesem Bereich zu vermeiden, sind die Verbindungsstege 8 in U-Form lo ausgebildet. Die Verbindungsstege 8 sind außerdem an einer durchgehenden Abdeckleiste 11 angeformt, die sich über die gesamte Länge der Gitterplatte 1 erstreckt. Die gegenüberliegende Seitenwandung 12 ist zur Unterseite 5 hin stufenförmig abgesetzt und weist in gleicher Position wie die Verbindungsstege 8 Wanddurchbrüche 13 auf. Die Wanddurchbrüche 13 stimmen mit dem Querschnitt der Verbindungsstege 13 überein. Die Abstufung der Seitenwand 12 ist derart ausgeführt, daß die obere senkrechte Stufenwand 14 das Widerlager 15 für das hanekförmig abgewinkelte Ende 9 der Verbindungsstege 8 bildet. Die Verbindungsstege 8 sowie die Wanddurchbrüche 13 bilden die Halbscharniere. Die zur Oberseite 2 parallele Stufenseite 16 wird von der Abdeckleiste 11 abgedeckt. Sie dient aber auch im Bereich der Wanddurchbrüche 13 zur seitlichen Führung und Abstützung der Verbindungsstege 8. Die Verbindungsstege 8 liegen außerdem bei verlegten Gitterplatten 1 auf der unteren Fläche 17 der Wanddurchbrüche 13 auf. Die Stirnseiten 18 der Gitterplatte 1 können glatt ausgeführt sein. Hier ist eine Verbindung mit der benachbarten Gitterplatte 1 nicht erforderlich, weil die Gitterplatten in der Regel versetzt zueinander verlegt werden.

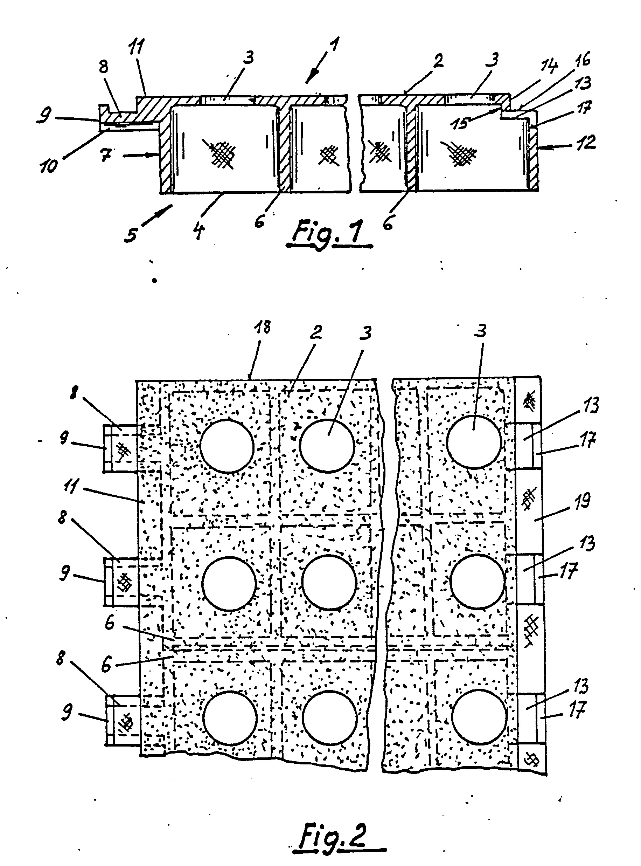

Wie aus der Fig. 2 zu ersehen ist, ist die Verrippung 6 in der Mitte der Gitterplatte 1 derart gestaltet, daß diese auch geteilt werden kann. Die halben Gitterplatten 1 dienen als Endstücke, wenn diese versetzt zu einander verlegt werden.

Die Verbindungsstege 8 können in der Länge so bemessen sein, daß die Gitterplatten 1 eine Verschiebefreiheit von 15 mm von bzw. zueinander haben. Damit lassen sich Schrumpfen und Verwerfen der Gitterplatten 1 leicht Kompensieren.

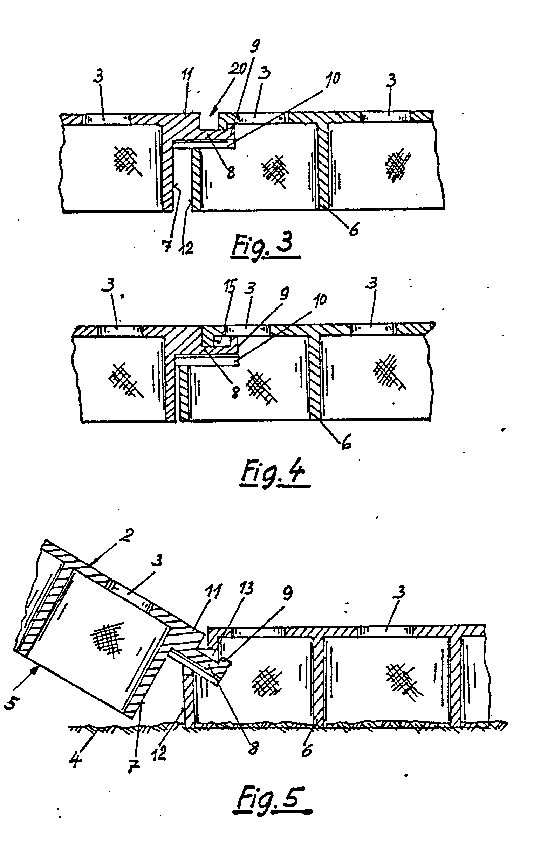

Die Fig. 3 zeigt zwei verlegte Gitterplattte 1 im auseinandergezogenen Zustand, während die Fig. 4 Gitterplatten 1 imm normalen, zusammengeschobenen Verlegungszustand veranschaulicht. Dieses Spiel von ca 15 mm hat den weiteren Vorteil, daß sich Gitterplatten 1 auch in einem flachen Kreisbogen verlegen lassen.

Die Fig. 5 demonstriert das Verlegen von Gitterplatten 1. Zum Einstecken der Verbindungsstege 8 in die Wanddurchbrüche 13 wird die zu verlegende Gitterplatte 1 in eine Schrägstellung von 30° bis 45° gebracht, worauf sich die Verbindungsstege 8 leicht in die Waddurchbrüche 13 einführen lassen. Nach dem Herunterschwenken der Gitterplatte 1 in die Verlegungsebene bzw. auf die Bodenfläche 4, verriegelt sich das hakenförmig abgewinkelte, zu einem Halbscharnier ausgebildete Ende 9 der Verbindungsstege 8 mit dem durch das Widerlager 15 gebildeten anderen Halbscharnier.

Sollen verlegte Gitterplatten 1 wider demontiert werden, so läßt sich die Verriegelung der Halbscharniere durch Anheben der zuletzt verlegten Gitterplatte 1 wieder leicht lösen und kann mit den Verbindungsstegen 8 aus den Wanddurchbrüchen 13 herausgenommen werden.

**Patentansprüche**

1. Gitterplatte aus Kunststoff, insbesondere aus Recycling-Kunststoff, mit einer rauhen rutschhemmenden Oberseite und einer rippenverstärken Unterseite, welche Gitterplatte als Befestigungselement für Parkplätze, Staßenbankette, Böschungen u.a. verlegbar ist, mit einer die verlegten Gitterplatten scharnierartig miteinander verbindenden, verriegelbaren, jedoch wieder lösbaren Steckverbindung, mit mindestens einem parallel zur Oberseite aus der Seitenwandung herausragenden Verbindungssteg dessen freies Ende hakenförmig abgewinkelt ist und mindestens einem Wanddurchbruch an einer anderen Seitenwandung zum Einhaken eines Verbindungssteges einer benachbarten Gitterplatte, dadurch gekennzeichnet, daß

a) die Seitenwandung (12) im Bereich der Wanddurchbrüche (13) von der Oberseite (2) der Gitterplatte (1) ausgehend nach unten stufenförmig abgesetzt ist,

b) die Verbindungsstege (8) an der Seitenwandung (7) an einer sich über die gesamte Länge der Gitterplatte (1) erstreckende Abdeckleiste (11) angeformt sind,

c) Verbindungsstege (8) sowie Wanddurchbrüche (13) Halbscharniere bilden,

d) die obere senkrechte Stufenwand (14) ein Widerlager (15) für das freie Ende (9) des Verbindungssteges (8) bildet und

e) die Wanddurchbrüche (13) weitgehend horizontal in der gegenüberliegenden Seitenwand (12) in gleicher Position wie die Verbidungsstege (8) angeordnet sind und in der zur Oberseite (2) parallelen Stufenwand (16) liegen und zur seitlichen Führung und Abstützung der Verbindungsstege (8) dienen.

2. Gitterplatte nach Anspruch 1, dadurch gekennzeichnet, daß die Verbindungsstege (8) in der Länge bis zur hakenförmigen Abwinkelung so bemessen sind, daß den Gitterplatten (1) eine Verschiebefreiheit von etwa 15 mm voneinander bzw. zueinander gegeben ist.

3. Gitterplatte nach Anspruch 2, dadurch gekennzeichnet, daß die Gitterplatte (1.) in Form eines Quadrates konzipiert ist.

**Revendications**

1. Plaque à grille de matière synthétique, préférablement de plastique à reclyclage, avec une face supérieure rugueuse et antidérapante et une face inférieure renforcée par des nervures, une plaque à grille qui peut être posée comme élément de fixation pour les parkings, rives de route, talus etc., avec un joint fiché, à verrouiller et à détacher, reliant en tant que charnière les plaques à grille posées, les unes avec les autres, avec au moins une barrette de connexion crochue, faisant saillie de la paroi latérale et au moins un adjour de paroi dans une autre paroi latérale, pour accrocher la barrette de connexion d'une plaque à grille voisine, caractérisé en ce que

a) la paroi latérale (12) est échelonnée à gradins près des adjours de paroi (13), à partir de la face supérieure (2) de la plaque à grille (1) vers le bas,

b) la paroi latérale (7) de la plaque à grille (1) présente au moins une barrette de connexion (8) faisant saille d'elle, parallèle à la face supérieure (2) et avec le bout libre (9) plié et crochu,

c) les barrettes de connexion (8) à la paroi latérale (7) sont formées, étant adaptées à une baguette couvrante (11) qui s'étend par toute la longeur de la plaque à grille (1),

d) les barrettes de connexion (8) et les adjours de paroi (13) forment des moitiés de charnière,

e) la paroi échelonnée verticale supérieure (14) forme l'aboutissement (15) et

f) les ajours de paroi (13) sont disposés plutôt horizontalement dans la paroi latérale opposée (12), dans la même position comme les barrettes de connexion (8), dans la paroi échelonnée (16) parallèle à la face supérieure (2), servant de guidage latéral et d'aboutissement pour les barrettes de connexion (8).

2. Plaque à grille selon la revendication 1, caractérisée en ce que les barrettes de connexion (8) sont dimensionées longitudinalement jusqu'au pliage crochu, de sorte que les plaques à grille (1) conservant une liberté de glissement pour s'éloigner ou s'approcher l'une de l'autre, d'environ 15 mm.

3. Plaque à grille selon la revendication 1, caractérisé en ce que la plaque à grille (1) est conçue dans la forme d'un carré.

**Claims**

1. Grid plate from synthetic material, preferably from recycling plastics, with a rough, antislip upper surface and a rib-reinforced underside, a grid plate which can be laid as fastening element for parking areas, road verges, slopes, etc., fitted with a plugged, hinge-like, locking and disengaging joint connecting the laid grid plates with each other, with at least one hook-shaped connecting fin projecting over the side wall and at least one wall opening in another side wall for nesting a connecting fin from a neighbouring grid plate, characterized in that

a) the side wall (12) near the wall openings (13) is set off by steps, beginning from the upper surface (2) of the grid plate (1) towards the bottom;

b) the side wall (7) of the grid plate (1) presents at least one connecting fin (8) projecting over it and running parallel to the upper surface (2), the free end (9) of the fin being hook-like bent,

c) the connecting fins (8) at the side wall (7) are shaped according to a capping (11) running over all the length of the grid plate (1).

d) the connecting fins (8) and the wall openings (13) form hinge halves.

e) the upper vertical step wall (14) forms the abutment (15), and

f) the wall openings (13) are arranged nearly horizontally in the opposite side wall (12) in the same position as the connecting fins (8), being situated in the stepped wall (16) parallel to the upper surface (2), serving as lateral guidance and abutment for the connecting fins (8).

2. Grid plate according to claim 1, characterized in that the connecting fins (8) are longitudinally dimensioned till the hook-like bend so that a sliding air of abt. 15 mm for getting farther or closer to each other is left to the girder plates (1).

3. Grid plate according to claim 2, characterized in that the grid plate (1) is conceived in the shape of a square.

Fig.1

Fig.2

Fig. 3

Fig. 4

Fig. 5